(19) Europäisches Patentamt
European Patent Office
Office européen des brevets

(11) Publication number: **0 359 255 A2**

(12) # EUROPEAN PATENT APPLICATION

(21) Application number: **89117027.6**

(51) Int. Cl.[5]: **G06F 15/72**

(22) Date of filing: **14.09.89**

(30) Priority: **14.09.88 JP 230963/88**

(43) Date of publication of application: **21.03.90 Bulletin 90/12**

(84) Designated Contracting States: **DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Kai, Naoyuki Intellectual Property Division**
**K.K. TOSHIBA 1-1 Shibaura 1-chome**
**Minato-ku**
**Tokyo 105(JP)**
Inventor: **Ohhashi, Masahide Intellectual Property Division**
**K.K. TOSHIBA 1-1 Shibaura 1-chome**
**Minato-ku**
**Tokyo 105(JP)**
Inventor: **Minagawa, Tsutomu Intellectual Property Division**
**K.K. TOSHIBA 1-1 Shibaura 1-chome**
**Minato-ku**
**Tokyo 105(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **Pattern data generating system.**

(57) A pattern data generating system includes a dx,dy generator (4), a memory unit (2), and an exclusive data bus (3) for data dx and dy. The dx,dy generator (4) converts outline data into raster data and sequentially generates the raster data as changes dx and dy each taking any one of +1, -1, and 0 at x- and y-coordinates. The memory unit (2) has a function of performing painting in units of scan lines. Changes dx and dy generated by the dx,dy generator (4) are transferred to the memory unit (2) through the exclusive data bus (3). A pattern in which painting is performed in accordance with outline data is generated by the pattern data generating system.

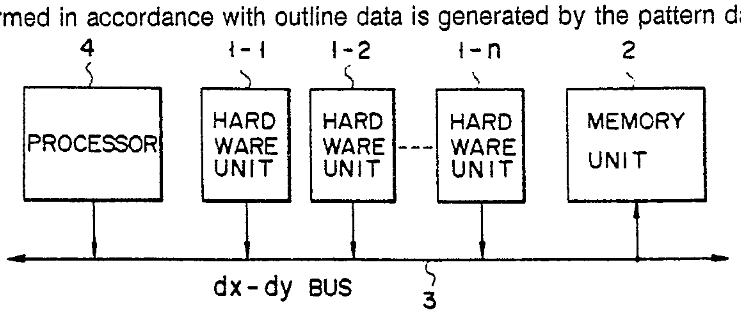


F I G. 3

EP 0 359 255 A2

Xerox Copy Centre

# Pattern data generating system

The present invention relates to a pattern data generating system for generating pattern data in which an arbitrary closed graphic pattern whose boundary data is defined on a two-dimensional bit map is filled or painted.

In electronic publication and the like, in order to facilitate enlargement, reduction, and rotation of characters, outline data (to be referred to as an outline font hereinafter) is prepared as character data. When a character is to be displayed using this outline font, the character is developed on a bit map as a painted pattern. Outline data is generally constituted by data of one or a plurality of closed curves each consisting of straight lines and cubic curves.

In a conventional system, a character pattern is generated by software processing, and filling or painting of the pattern is performed by a scan conversion for polygons. A conventional filling/painting operation of a polygon using the scan conversion will be described below with reference to Fig. 1 and Figs. 2A to 2C. Referring to Fig. 1, reference numeral 71 denotes a rectangular area to be scan-converted; 72 to 77, vertexes of the boundaries of a polygon; 78 to 83, sides of the polygon; and 91, one scan line. In a conventional system, pattern data is generated in accordance with the following procedures:

Procedure (1.1): Each segment of a closed curve is decomposed into a plurality of straight lines so as to represent the closed curve as a polygon.

Procedure (1.2): Filling or painting of a closed graphic pattern surrounded by the closed curve is performed by the scan conversion for polygons.

In addition, painting of a closed graphic pattern is performed by the conventional scan conversion for polygons in accordance with the following procedures:

Procedure (2.1): Intersection points P0, P1, P2, and P3 of the one scan line 91 in Fig. 1 and sides of the polygon are obtained. Then, the intersection points sorted in the order of the coordinate values in the scan direction.

Procedure (2.2): If a given intersection point is an end of a side, i.e., a vertex of the polygon, the given intersection point is processed in accordance with a connection state of the sides of the polygon. In the case shown in Fig. 2A, for example, a vertex A is processed as a normal intersection point. In the case shown in Fig. 2B, one of vertexes B and C is processed as an intersection point. In the case shown in Fig. 2C, a vertex D is processed as two intersection points.

Procedure (2.3): The sorted intersection points are paired, and lines having these pairs as their both ends (lines 84 and 85 in Fig. 10) are painted.

Accordingly, in the conventional system, since software processing, such as sorting, takes a considerably long period of time, high-speed filling/painting cannot be performed. Furthermore, it is practically difficult to achieve the function of the software processing by a hardware system. In addition, when lines are to be filled or painted, vertexes require special processing, as described in the above procedure. Moreover, even if a change in each point of a curve defining an area is generated in a software manner by using a processor or in a hardware manner by using a DDA (Differential Digital Analyzer) or the like, the change in each point must be processed as one line in scan conversion. As a result, a large amount of data must be processed.

As described above, in the conventional system, when painting of a closed graphic pattern is performed, various drawbacks are posed, e.g., high-speed processing cannot be performed, and a hardware system is difficult to arrange.

It is, therefore, an object of the present invention to provide a pattern data generating system which can generate a painted pattern at high speed.

In order to achieve the above object, according to the present invention, there is provided a pattern data generating system comprising a dx,dy generator for converting outline data into raster data and sequentially generating the raster data as changes dx and dy each taking any one of +1, -1, and 0 at x- and y-coordinates, a memory unit, having a function of painting in units of scan lines, for storing the changes dx and dy generated by the dx,dy generator, and an exclusive data bus for transferring the changes dx and dy generated by the dx,dy generator to the memory unit.

According to the above-described arrangement, a painted pattern can be generated at high speed by hardware including the dx,dy generator, the memory, and the exclusive data bus for changes dx and dy without performing software processing.

Therefore, a pattern data generating system which can generate a painted pattern at high speed can be provided.

This invention can be more fully understood from the following detailed description when taken in

conjunction with the accompanying drawings, in which:

Figs. 1, 2A to 2C are views for explaining a conventional painting operation of a closed graphic pattern;

Fig. 3 is a block diagram showing a schematic arrangement of a pattern data generating system according to an embodiment of the present invention;

Fig. 4 is a view for explaining an operation of generating pattern data by using the pattern data generating system in Fig. 3;

Fig. 5 is a block diagram showing an arrangement of an overall system according to a first embodiment of the present invention;

Fig. 6 is a flow chart for explaining an operation of the system in Fig. 5;

Figs. 7A to 7F are views for explaining an operation of the system in Fig. 5 and respectively show relationships between curves and storage states of a memory;

Figs. 8A and 8B are views for explaining an operation of the system in Fig. 5 and respectively show data to be stored;

Fig. 9 is a flow chart for explaining another operation of the system in Fig. 5;

Figs. 10A to 10C are views relationships between curves generated in accordance with the operation of the flow chart in Fig. 9 and the storage states of the memory;

Figs. 11 and 12 are views for explaining a painting operation of boundary data in accordance with the first embodiment;

Fig. 13 is a block diagram showing an arrangement of a Bezier curve generator in Fig. 5;

Fig. 14 is a block diagram showing a detailed arrangement of an adjusting unit for x-coordinates in Fig. 13;

Fig. 15 is a block diagram showing an arrangement of a memory unit in Fig. 5;

Fig. 16 is a circuit diagram showing a detailed arrangement of a scan latch/logic circuit arranged in the memory unit in Fig. 15;

Fig. 17 is a view showing a detailed character pattern generated by the system according to the first embodiment;

Fig. 18 is a block diagram showing a generally employed arrangement of a processor and a memory unit in the system in Fig. 3;

Fig. 19 is a block diagram showing an arrangement of a circuit obtained by applying the present invention to a processor and memory unit in the system shown in Fig. 3;

Fig. 20 is a flow chart for explaining an operation of the circuit in Fig. 19; and

Fig. 21 is a view showing a straight line generated by the circuit in Fig. 19.

Fig. 3 is a block diagram showing a schematic arrangement of a pattern data generating system according to an embodiment of the present invention. This system includes exclusive hardware units 1-1, 1-2, ..., 1-n for generating data (dx,dy) by converting an outline into a raster pattern, a memory unit 2 for painting, an exclusive dx-dy bus 3 for efficiently transferring the data (dx,dy), and a processor 4 for controlling the overall system. The hardware units 1-1, 1-2, ..., 1-n, the memory unit 2, and the processor 4 are coupled to each other through the dx-dy bus 3.

In this pattern data generating system, in the first step, a pattern to be painted is divided into several closed curves, and the outline of each closed curve is converted into a raster pattern. In the second step, painting is performed by using the memory unit 2.

In the first step, as shown in Fig. 4, coordinates (x0,y0) of one point (start point) of one closed curve, and a string (dx0,dy0), (dx1,dy1), ..., (dxm-1,dym-1) (where $\underline{m}$ is the number of points on the closed curve) of x- and y-coordinate changes (dx,dy) at the x- and y-coordinates representing the outline are generated by the exclusive hardware units 1-1, 1-2, ..., 1-n. Note that these hardware units 1-1, 1-2, ..., 1-n are selectively used in accordance with types of partial lines (to be referred to as segments hereinafter) constituting a closed curve. Data (dxi,dyi) generated in this step satisfies the following conditions:

$$\left.\begin{aligned} dxi &= \pm 1,\ 0 \\ dyi &= \pm 1,\ 0 \\ \sum_{i=0}^{m-1} dxi &= \sum_{i=0}^{m-1} dyi = 0 \end{aligned}\right\} \quad \ldots (1)$$

In this second step, the coordinates of the start point on the one closed curve, which is generated in the first step, are set in x- and y-address registers of the memory unit 2 as initial values. Subsequently, the

contents of the x- and y-address registers are updated in accordance with the changes (dx,dy) as follows:

$$\left.\begin{array}{l} x \leftarrow x + dx \\ y \leftarrow y + dy \end{array}\right\} \quad \ldots(2)$$

In addition, data required for painting are written at corresponding bit positions of a bit map memory arranged in the memory unit 2, and painting is performed in units of lines on the basis of the data.

Pattern data is generated by using the above-described system as follows:

Procedure (3.1): Initial values are set in the x-and y-address registers of the memory unit 2 in units of closed curves. The processor 4 selects one of the hardware units 1-1, 1-2, ..., 1-n in accordance with a type of line in units of segments of a given closed curve. Subsequently, the processor 4 sets parameters for drawing the closed curve in the selected hardware unit, and supplies a start signal thereto. Upon reception of the start signal, the hardware unit converts the closed curve into a raster pattern in accordance with the preset parameters to generate data (dx,dy) and outputs it to the dx-dy bus 3. The memory unit 2 sequentially fetches the data (dx,dy) from the dx-dy bus 3 and writes data for painting in the bit map memory.

Procedure (3.2): Upon completion of the above procedure with respect to all the closed curves included in the pattern, the processor 4 supplies a signal for starting a painting operation to the memory unit 2. As a result, the memory unit 2 performs painting on the basis of the painting data generated in the procedure (3.1).

Fig. 5 is a block diagram showing an overall arrangement of a pattern data generating system of the present invention which is used to paint an outline font.

This pattern data generating system comprises a Bezier curve generator 11-1, a straight line generator 11-2, memory units 12-1 and 12-2, a dx-dy bus 13, a control processor 14, a data bus 15, and a system memory unit 16. The Bezier curve generator 11-1 generates data (dx,dy) for a Bezier curve. The straight line generator 11-2 generates data (dx,dy) for a straight line. The Bezier curve generator 11-1 and the straight line generator 11-2 are exclusive hardware for converting an outline font into a raster pattern. The memory units 12-1 and 12-2 respectively store data for painting. These two memory units 12-1 and 12-2 for painting are used for double buffering to be described later. The Bezier curve generator 11-1, the straight line generator 11-2, the memory units 12-1 and 12-2, the processor 14, and the system memory unit 16 are commonly connected to each other through the data bus 15. In addition, the Bezier curve generator 11-1, the straight line generator 11-2, the memory units 12-1 and 12-2, and the processor 14 are commonly connected to each other through the dx-dy bus 13.

Pattern data is generated by using the above=described hardware in accordance with the following procedures:

Procedure (4.1): The start point of one closed curve of several divided closed curves, from which pattern data is to be generated, is set in one memory unit 12-1.

Procedure (4.2): The Bezier curve generator 11-1 or the straight line generator 11-2 is selected in accordance with a type of line in units of segments of the closed curve. If the line is a straight line, parameters are set in the straight line generator 11-2, and the straight line generator 11-2 is started. Upon starting, in the Bezier curve generator 11-1 or the straight line generator 11-2, the line is converted into a raster pattern in accordance with the preset parameters so as to generate data (dx,dy).

Procedure (4.3): The data (dx,dy) is supplied to the memory unit 12-1 or 12-2, and data at each point on the boundary is generated in accordance with a predetermined algorithm. Subsequently, in the corresponding memory unit, exclusive OR results of data (x,y) at the respective points which are generated beforehand and "1" are sequentially written in a bit map memory (to be simply referred to as a memory hereinafter). That is, data represented by:

$d(x,y) \leftarrow d(x,y) \oplus \text{"1"} \quad (3)$

are written in the memory.

The above procedures (4.1), (4.2), and (4.3) are repeated for all the closed curves of the outline.

Procedure (4.4): A painting operation of the memory unit 12-1 is started to perform painting.

Procedure (4.5): A pattern obtained in the memory unit 12-1 is read out through the data bus 15 to be stored in the system memory unit 16, and the next pattern is simultaneously generated by using the memory unit 12-2. That is, pattern data are alternately generated and read out by using the two memory units 12-1 and 12-2. In other words, a double buffering operation is performed with respect to the system memory unit 16.

The memory units 12-1 and 12-2 generate data d (x,y) at the respective coordinate points in accordance with an algorithm shown in a flow chart in Fig. 6 on the basis of the data (dx,dy) at the respective coordinate points generated by the Bezier curve generator 11-1 and the straight line generator 11-2. When data at the respective coordinate points are to be written in the memory, the exclusive OR results of the data d (x,y) corresponding to the respective points (x,y) and "1" are written in the memory.

In the flow chart shown in Fig. 6, data (dx,dy) is given in step S1. In step S2, the latest dyn value which is held beforehand is checked. If the value is -1, the flow advances to step S3; if 0, the flow advances to step S4; and if +1, the flow advances to step S5.

In step S3, a dy value is checked. If the value is -1, the flow advances to step S6; if 0, the flow advances to step S7; and if +1, the flow advances to step S8. In step S6, a dot is plotted at a point (x,y). In step S9, the point (x,y) is updated. In step S10, the latest (dx,dy) values are held as (dxn,dyn), and the flow returns to step S1.

In steps S7 and S8, whether a right turn is to be made is checked. In this case, the right turn means that a vector of (dx,dy) is bent to the right with respect to a vector of (dxn,dyn). For example, assume that a coordinate system in which a right direction is a + direction of x and a downward direction is that of as shown in Fig. 7A is used. In this case, when the value of t given by the following equation is larger than 0 (t > 0), a right turn is to be made; when it is smaller than 0 (t < 0), a left turn is to be made; and when it equals 0 (t = 0), forward or backward movement is to be made:

$t = dxn \cdot dy - dyn \cdot dx$ · (4)

If no right turn is determined in any of S7 and S8, no dot is plotted at that point, and the flow advances to S9. If a right turn is determined in S7, a dot is plotted at the point (x,y) in step S6, and the flow advances to step S9. If a right turn is determined in step S8, a dot is plotted at the point (x,y) in step S11, and a dot is plotted at a point (x+1,y) in step S12. The flow then advances to step S9.

In step S4, whether a right turn is to be made is checked. If no right turn is determined in S4, no dot is plotted as described above. If a right turn is determined in S4, the flow advances to S13. In S13, the value of dy is checked. If the value is -1, a dot is plotted at point (x,y); and if +1, a dot is plotted at point (x+1,y). The flow then advances to S9.

In step S5, the value of dy is checked. If the value is -1, the flow advances to step S15; if 0, it advances to step S16; and if +1, it advances to step S14 and a dot is plotted at a point (x+1,y). In steps S15 and S16, whether a right turn is to be made is checked. If no right turn is determined in any of steps S15 and S16, no dot is plotted, and the flow advances to step S9. If a right turn is determined in step S15, a dot is plotted at a point (x,y) in step S11, and a dot is plotted at a point (x+1,y) in step S12. If a right turn is determined in step S16, the flow advances to step S14 and a dot is plotted at a point (x+1,y).

An operation of filling or painting a polygon having the closed curve as shown in Fig. 7A as its boundary in accordance with the above sequence will be described below. Assume that a vertex p11 of the closed curve shown in Fig. 7A is selected as a start point.

No data is written in a point q11 stored in the memory shown in Fig. 7B and corresponding to the point p11, i.e., the point q11 is kept "0".

Differences (dx,dy) = (0,-1) of a next point p13 with respect to a point p12 of the polygon are given. At this time, differences from the preceding point p12 are given as (dxn,dyn) = (+1,-1). Since dyn is -1 and dy = -1, "1" as an exclusive OR result between "-1" and "1" is written in coordinates (x,y), i.e., a point q12 stored in the memory shown in Fig. 7B and corresponding to the point p12 in step S6.

Differences (dx,dy) = (+1,0) of a next point p14 with respect to the point p13 are given. In this case, dyn = -1 and dy = 0, and a right turn is to be made. In step S6, therefore, "1" is written in coordinates (x,y), i.e., a point q13 stored in the memory shown in Fig. 7B and corresponding to the point p13.

Differences (dx,dy) = (+1,+1) of a next point p15 with respect to the point p14 are given. In this case, dyn = 0 and a right turn is to be made, and dy = +1. In step S14, therefore, "1" is written in coordinates (x+1,y), i.e., a point q14 stored in the memory shown in Fig. 7B and offset by one point to the right with respect to the point p14.

Differences (dx,dy) = (+1,-1) of a next point p16 with respect to the point p15 are given. In this case, dyn = +1, dy = -1, and no right turn is to be made. Therefore, no dot is plotted at the point p15.

Differences (dx,dy) = (+1,+1) of a next point p17 with respect to the point p16 are given. In this case, dyn = -1, dy = +1, and a right turn is to be made. In step S11, therefore, "1" is written in coordinates (x,y), i.e., a point q16A stored in the memory shown in Fig. 7B and corresponding to the point p16. Then in step S12, "1" is written in coordinates (x+1,y), i.e., a point q16B stored in the memory shown in Fig. 7B and offset by one point to the right with respect to the point p16.

Differences (dx,dy) = (0,+1) of a next point p18 with respect to the point p17 are given. In this case, dyn = +1 and dy = +1. In step S14, therefore, "1" is written in coordinates (x+1,y), i.e., a point q17

stored in the memory shown in Fig. 7B and offset by one point to the right with respect to the point p17. Similarly, "1" are written in points q18 and q19 stored in the memory shown in Fig. 7B and offset by one point each to the right with respect to the points p18 and p19, respectively.

Differences (dx,dy) = (-1,0) of a next point p21 with respect to the point p20 are given. In this case, dyn = +1, dy = 0, and a right turn is to be made. In step S14, therefore, "1" is written in coordinates (x+1,y), i.e., a point q20 stored in the memory shown in Fig. 7B and offset by one point to the right with respect to the point p20.

Differences (dx,dy) = (-1,0) of a point p22 with respect to the point p21 are given. In this case, dyn = +1, dy = 0, and movement to be made is not a right turn but a horizontal movement. Therefore, no dot is plotted at the point p21.

Differences (dx,dy) = (-1,-1) of a next point p23 with respect to the point p22 are given. In this case, dyn = -1 and dy = -1. In step S6, therefore, "1" is written in coordinates (x,y), i.e., a point q22 stored in the memory shown in Fig. 7B and corresponding to the point p22.

Differences (dx,dy) = (-1,-1) of the next point (start point p11) with respect to the point 23 are given. In this case, similar to the case of the point p22, "1" is written in a point q23 in the memory shown in Fig. 7B and corresponding to the point p23.

In this manner, the operation returns to the start point p11. In this case, since final changes (dxy,dyn) are (-1,-1) and initial changes (dx,dy) are (+1,-1), dyn = -1 and dy = -1 are obtained. In step S6, therefore, "1" is written in coordinates (x,y), i.e., a point q11 stored in the memory shown in Fig. 7B and corresponding to the start point p11 for the first time.

In this manner, for all the lines to be filled or painted along the scan line direction, a point on each line is written as one of its two end points in the memory, while a point offset by one point in the scan direction is written as the other. Thereafter, the following calculations are performed using the data as shown in Fig. 7B, and calculation results are written in the memory.

$$\left.\begin{array}{l} d0' \leftarrow d0 \\ d1' \leftarrow d0' \oplus d1 \\ \quad\vdots \\ d(w-1)' \leftarrow d(w-2)' \oplus d(w-1) \end{array}\right\} \quad \cdots (5)$$

In these calculations, if one scan line includes w bits of b0, b1, ..., b(w-1) as shown in Fig. 8A, "0" as b0 in Fig. 8A is directly written in b0′ after calculation. An exclusive OR result between b0 and b1 shown in Fig. 8A is written in b1′ after calculation. In this case, since b0 = b1 = "0", "0" is written in b1′ after calculation. An exclusive OR result between b0, b1, and b2 shown in Fig. 8A is written in b2 after calculation. In this case, since b0 = b1 = "0" and b2 = "1", "1" is written in b2′ after calculation. Similar calculations are sequentially performed to obtain data as shown in Fig. 8B. As a result of calculations of all the scan lines shown in Fig. 7B, pattern data shown in Fig. 7C is obtained with respect to the input graphic pattern shown in Fig. 7A. Using this pattern data, a graphic pattern, in which the area of polygons having the closed curve shown in Fig. 7A as a boundary is filled or painted, can be accurately displayed.

As described above, in the above embodiment, pattern data in which painting is performed is generated by using the exclusive hardware. Therefore, unlike a conventional system, sorting need not be performed, and high-speed processing can be realized.

A modification of the above embodiment will be described below. In the above description, pattern data in which an area surrounded by a closed curve is painted is generated. However, pattern data in which a portion outside the above area is painted as shown in Fig. 7D can be generated. In this case, in place of the calculation of equation (5), the following calculation may be executed to the data shown in Fig. 7B for each scan line:

$$\left.\begin{aligned} d0' &\leftarrow d0 \oplus \text{"1"} \\ d1' &\leftarrow d0' \oplus d1 \\ &\vdots \\ d(w-1)' &\leftarrow d(w-2)' \oplus d(w-1) \end{aligned}\right\} \quad \ldots (6)$$

In the above description, the closed curve is generated clockwise. In this modification, however, an algorithm shown in a flow chart of Fig. 9 in place of that shown in Fig. 6 may be used to process each point generated counterclockwise.

In addition, in the above description, the area surrounded by the closed curve is painted together with the boundary. The boundary, however, need not be included to perform filling or painting. In this case, the algorithm as shown in the flow chart of Fig. 9 may be used to process each point for a clockwise boundary, and that shown in the flow chart of Fig. 6 may be used to process each point for a counterclockwise boundary. As a result, data as shown in Fig. 7E is obtained from the boundary data as shown in Fig. 7A. When the calculation of equation (5) is executed to the data shown in Fig. 7E in units of scan lines, pattern data as shown in Fig. 7E is obtained.

According to the above embodiment, filling or painting can be correctly performed to even boundary data as shown in Fig. 10A. That is, in this case, one scan line 21 shown in Fig. 10A has a boundary and four intersection points 22 to 25. Since two intersection points 23 and 24 are adjacent along a scan line, only a line connecting intersection points 22 and 25 may be painted. In this case, points 32, 33, and 34 are written as intersection points 22 to 25 as shown in Fig. 10B. At this time, since the point 33 is written twice, it becomes "0". Therefore, "1"s are written in two points 32 and 34 on the scan line 21. As a result, correct pattern data in which an area including a boundary is painted as shown in Fig. 10C is finally obtained.

The Bezier curve generator 11-1 used in the above embodiment generates the data (dx,dy) on the basis of the following principle. Generally, a curve P(t) whose coordinates are represented by a cubic function having a parameter t as shown in Fig. 11 can be represented as follows:

$P(t) = P0 * (1 - t)^3 + P1 * 3t(1 - t)^2 + P2 * 3t^2(1 - t) + P3 * t^3$ (where $0 \leq t \leq 1$) (7)

Such a curve is called a Bezier curve. P0 (x0,y0), P1 (x1,y1), P2 (x2,y2), and P3 (x3,y3) are called reference points of this Bezier curve. Such a Bezier curve is often used to represent a curve segment of the outline font of a character.

If the Bezier curve P(t) is divided into two portions at a point at which the parameter t is 1/2, as shown in Fig. 12, both the divided portions can be represented by equation (7) as Bezier curves. Reference points Qi an Pi of these curves are given by the following equations:

$$\left.\begin{aligned} Q0 &= P0 \\ Q1 &= (P0 + P1)/2 \\ Q2 &= (P0 + 2P1 + P2)/4 \\ Q3 &= (P0 + 3P1 + 3P2 + P3)/8 \end{aligned}\right\} \quad \ldots (8)$$

$$\left.\begin{aligned} R0 &= Q3 \\ R1 &= (P1 + 2P2 + P3)/4 \\ R2 &= (P2 + P3)/2 \\ R3 &= P3 \end{aligned}\right\} \quad \ldots (9)$$

Fig. 13 is a block diagram showing a detailed arrangement of the Bezier curve generator 11-1. The Bezier curve generator comprises x and y registers 41 and 42 for respectively holding x- and y-coordinate values of reference points P0, P1, P2, and P3 of a preset curve P(t), adjusting units 43 and 44 for dividing the Bezier curve P(t) into two portions in accordance with equation (7) and generating new pairs of reference points Qi and Ri, respectively, x and y stacks 45 and 46 for respectively holding x- and y-coordinate values of the new pairs of reference points Qi and Ri generated by the adjusting units 43 and 44,

and a determination unit 47 for determining whether divided Bezier curves are sufficiently small and can be replaced by one step of (dx,dy). As shown in Fig. 14, the adjusting unit 43 for x-coordinates is constituted by six mean value circuits 48. Each circuit 48 consists of an adder and 1-bit shift circuit and is designed to obtain a mean value (a,b)/2 of two inputs a and b. When the processor 14 sets reference points and supplies a start signal to the Bezier curve generator, the generator sequentially generates data (dx,dy) of a Bezier curve and outputs them to the dx-dy bus 13.

The straight line generator 11-2 is constituted by a DDA (Differential Digital Analyzer) and the like. The generator 11-2 sequentially generates data (dx,dy) of a straight line in accordance with a Bresenham's algorithm, and outputs them to the dx-dy bus 13.

Each of the memory units 12-1 and 12-2 has an arrangement shown in Fig. 15. More specifically, each memory unit comprises A- and B-plane memory cell arrays 51 and 52, row decoders 53 and 54, a column decoder 55, sense amplifier-I/O gate circuits 56 and 57 for the cell arrays 51 and 52, respectively, a scan latch/logic circuit 58 for painting, a register 59 for holding (dx,dy) values input from the dx-dy bus 13, a register 60 for holding (dx,dy) values of a start point of one closed curve, a register 61 for holding immediately preceding (dx,dy) values, x and y counters 62 and 63, a drawing control unit 64 for determining whether to write data for painting in the memory cell arrays 51 and 52 in accordance with the algorithm shown in the flow chart of Fig. 9, and I/O buffers 65 and 66 for respectively outputting the contents of the memory cell arrays 51 and 52 to the data bus 15 or supplying data on the data bus 15 to the memory cell arrays 51 and 52.

The memory unit having the above-described arrangement has the following functions:

(5.1) to sequentially fetch (dx,dy) values from the dx-dy bus 13 so as to write data corresponding to a complete boundary in the A-plane memory cell array 51 and to write data necessary for painting in the B-plane memory cell array 52;

(5.2) to perform painting by using the scan latch/logic circuit 58 and generate a painted pattern in the B-plane memory cell array 52; and

(5.3) to output the pattern generated in the B-plane memory cell array 52 to the data bus 15.

Fig. 16 is a circuit diagram showing a detailed arrangement of the scan latch/logic circuit 58 arranged in the memory unit in Fig. 15. A 1-bit portion of the circuit 58 is constituted by a 1-bit latch circuit 67, an EXOR gate 68 for receiving outputs from the latch circuit 67 and the B-plane memory cell array 52 and feeding back an output to the latch circuit 67, and an OR gate 69 for receiving outputs from the latch circuit 67 and the A-plane memory cell array 51 and supplying an output to the B-plane memory cell array 52.

By using the pattern data generating system having the above-described arrangement, painted patterns can be generated using hardware, and hence patterns can be generated at high speed. According to a simulation conducted by the present inventors, it took 1,085 µsec to generate a painted pattern of a character shown in Fig. 17 (a chinese character corresponding to "dream") at a resolution of 1,000 × 1,000 dots. It took 107 µsec to generate an identical pattern at a resolution of 100 × 100 dots. This processing time is greatly shortened to about 1/1,000 that in conventional software processing.

In addition, since the dx-dy bus is arranged in the pattern data generating system of the above embodiment, flexibility in patterns to be generated is increased, e.g., exclusive hardware can be added in accordance with an arbitrary curve, and some segments can be generated using a processor.

In the first embodiment, the present invention is applied to a system for painting an outline font. However, the present invention can be applied to a processor for generating straight line data. Such a processor generally has an arrangement shown in Fig. 18. Fig. 18 shows arrangements of the processor 4 and the memory unit in the circuit shown in Fig. 3. The processor 4 includes a CPU 100, a decoder 101, and a bus connecting circuit 102. The memory unit 2 includes a drawing circuit 104, a memory interface 114, and an external memory 115. The CPU 100 and the memory 115 are connected to each other through an address bus 105 and an n-bit data bus 106. The input terminal of the decoder 101 is coupled to the address bus 105. An address signal is decoded by the decoder 101. A decode output from the decoder 101 is supplied to the control input terminal of the bus connecting circuit 102. The data bus 106 is coupled to the input terminal of the bus connecting circuit 102, so that m-bit ($m \ll n$) data (dx,dy) on the data bus 106 is supplied to the drawing circuit 104 on the basis of an output from the decoder 101.

With the above-described arrangement, an address signal is supplied from the CPU 100 to the memory 115 through the address bus 105. As a result, data read out from a selected address of the memory 115 is supplied to the CPU 100 through the data bus 106, and an arithmetic operation is performed. Thereafter, data (dx,dy) is generated on the basis of the operation result in the CPU 100. The bus connecting circuit 102 is controlled by the decoder 101, so that the data (dx,dy) is supplied to the drawing circuit 104.

The drawing circuit 104 includes coordinate registers X and Y and stores the dx and dy values supplied through the dx-dy bus 3. The values stored in the registers X and Y are sequentially updated and converted

into data of addresses and straight lines for the external memory 115. The data of addresses and straight lines are written as graphic data in the external memory 115 through the memory interface 114.

In the above-described arrangement, however, in order to transfer m(3 to 4)-bit data, an n(16 or 32)-bit bus is occupied. This interferes with transfer of a normal program or data. In addition, since data (dx,dy) is generated by a program, a large number of steps are required, and the processing speed is decreased.

In order to solve such a problem, the processor 4 and the memory unit 2 may be arranged as in a second embodiment of the present invention shown in Fig. 19. The processor 4 comprises an ALU 107, a combinational circuit 108, a mode setting circuit 109, a FIFO register 110, a general-purpose register 111, an internal data bus 112, and a bus driver/receiver 113. The memory unit 2 includes a drawing circuit 104, a memory interface 114, and an external memory 115. The two input terminals of the ALU 107 are respectively connected to source buses 112-1 and 112-2 of the internal bus 112. A destination bus 112-3 is connected to the output terminal of the ALU 107. A sign flag representing that an operation result output from the ALU 107 is negative is supplied to the combinational circuit 108, and an arithmetic operation is executed in accordance with a value set in three mode bits MD0 to MD2 in the mode setting circuit 109.

The meanings of the mode bits MD0 to MD2 are (see Fig. 21):

If

$\Delta X = X1 - X0$

$\Delta Y = Y1 - Y0$,

then

MD0 : 1 represents $|\Delta X| < |\Delta Y|$

MD1 : 1 represents $\Delta X < 0$

MD2 : 1 represents $\Delta Y < 0$

Operation results from the combinational circuit 108 are stacked in the register 110 and are sequentially and externally output from its output port in the same order that the results are input. At the same time, the operation results are supplied to the drawing circuit 104 through the dx-dy bus 3. The general-purpose register 111 includes at least four general-purpose registers RE0 to RE3. Data on the destination bus 112-3 is selectively stored in these registers RE0 to RE3 and is output onto the source buses 112-1 and 112-2. The bus driver/receiver 113 drives the internal data bus 112 in accordance with data supplied from the external memory 115 through the memory interface 114, or supplies data on the internal data bus 112 to the external memory 115 through the memory interface 114.

The drawing circuit 104 includes coordinate registers X and Y and stores the dx and dy values supplied through the dx-dy bus 3. The values stored in the registers X and Y are sequentially updated and converted into data of addresses and straight lines for the external memory 115. The data of addresses and straight lines are written as graphic data in the external memory 115 through the memory interface 114.

The system shown in Fig. 19 generates data of a straight line shown in Fig. 21 in accordance with a Bresenham's algorithm shown in a flow chart in Fig. 20. An operation of generating the straight line data will be described below.

In steps S1 to S4, initialization is performed. More specifically, in step S1, a value $\Delta L$ is set in the general-purpose register RE3 (serving as a counter). In step S2, data is written in the mode bits of the mode setting circuit 109 so as to set an operation mode of the combinational circuit 108. In step S3, "$2*\Delta S$" and "$2*\Delta S - 2*\Delta L$" are respectively set in the general-purpose registers RE1 and RE2 of the register 111. In step S4, "$2*\Delta S - \Delta L$" is set in the general-purpose register RE0 of the register 111. Steps S1 to S3 need not be always executed in this order. These steps can be executed in an arbitrary order as long as they are executed prior to step S4.

The above-described initialization process can be summarized as follows (see Fig. 21):

If

$\Delta L = Max(|\Delta X|, |\Delta Y|)$

$\Delta S = Min(|\Delta X|, |\Delta Y|)$,

then,

$RE0 = 2*\Delta S - \Delta L$

$RE1 = 2*\Delta S$

$RE2 = 2*\Delta S - 2*\Delta L$

$RE3 = \Delta L$

Subsequently, the data stored in the registers RE0 to RE2 are supplied to the ALU 107 through the source buses 112-1 and 112-2, and an arithmetic operation is performed in the ALU 107. A sign flag SF is supplied to the combination circuit 108 in accordance with the operation result. The combinational circuit 108 checks whether the sign flag SF is "0" or "1" (step S5). If it is "0", an arithmetic operation in step S6 is executed by the combinational circuit 108. Otherwise, an arithmetic operation in step S7 is executed by the

circuit 108. The arithmetic operations in steps S6 and S7 are executed by a special instruction in such a manner that arithmetic operations between the registers are performed, while the value of the sign flag SF is supplied to the combinational circuit 108 and its outputs dx and dy are stored in the register 110. The sign flag SF is set by only the special instruction but is not set by other instructions. Upon completion of the arithmetic operation, the value in the register RE3 is decremented by "1" (step S8). The operation in steps S5 to S8 is repeated until the value in the register RE3 becomes "0" (step S9).

A logic used by the combinational circuit 108 is represented as follows:

DX0 = -MD0 + SF

DX1 = MD1

DY0 = MD0 + SF

DY1 = MD2

where SF is the sign flag and + represents an AND operation. In addition, four bits DX0, DX1, DY0, and DY1 are values of dx and dy.

In the processor having the above-described arrangement, since the exclusive bus 3 for data dx and dy is arranged, data dx and dy can be transferred without using the normal internal bus 112 connected to the CPU 107. Therefore, when data dx and dy are transferred, execution of other programs or transfer of other data are not interfered. In addition, since data dx and dy are generated by the combinational circuit 108, the processing speed can be greatly increased as compared with a case wherein data dx and dy are generated by a program.

Reference signs in the claims are intended for better understanding and shall not limit the scope.

## Claims

1. A pattern data generating system for generating a pattern in which painting is performed in accordance with outline data, characterized in that said system comprises
dx,dy generating means (4, 1-1, 1-2, ..., 1-n) for converting outline data into raster data and sequentially generating the raster data as changes dx and dy each taking any one of +1, -1, and 0 at x- and y-coordinates, memory means (2), having a function of painting in units of scan lines, for storing the changes dx and dy generated by said dx,dy generating means (4, 1-1, 1-2, ..., 1-n), and an exclusive data bus (3) for transferring the changes dx and dy generated by said dx,dy generating means (4, 1-1, 102, ..., 1-n) to said memory means (2).

2. A system according to claim 1, characterized in that said dx,dy generating means (4, 1-1, 1-2, .... 1-n) comprises a Bezier curve generator (11-1) for generating Bezier curve data, and a straight line generator (11-2) for generating straight line data.

3. A system according to claim 1, characterized in that said memory means (2) comprises first and second memory units (12-1, 12-2), pattern data being generated using said first memory unit (12-1) and the pattern data generated by said first memory unit (12-1) being read out using said second memory unit (12-2).

4. A processor having a data bus (112), an ALU (107) for receiving data from said data bus (112), and register means (111) for storing an operation result from said ALU (107), characterized in that said processor comprises
an exclusive internal dx-dy bus (3) for transferring data dx and dy, a combinational circuit (108) for performing a logic operation upon reception of a flag (SF) based on an operation result output from said ALU (107) and outputting data dx and dy, and means for supplying an output from said combinational circuit (108) to said exclusive internal dx-dy bus (3) in response to a special operation instruction, and for causing the operation result of said ALU (107) to be stored in said register means (111).

5. A processor according to claim 4, characterized in that said processor further comprises a FIFO register (110) arranged between said combinational circuit (108) and said exclusive internal dx-dy bus (3) for transferring data dx and dy, the data dx and dy generated upon execution of the special operation instruction being temporarily stored in said FIFO register (110) and then output to said internal dx-dy bus (3).

6. A processor according to claim 4, characterized in that said processor further comprises a drawing circuit (104) and an external memory (115) connected to said exclusive internal dx-dy bus (3), data on said exclusive internal dx-dy bus (3) being fetched into said drawing circuit (104) to reconstruct a graphic pattern, and address and data of said external memory (115) being generated to write graphic data in said external memory (115).

7. A processor having a data bus (112), an ALU (107) for receiving data from said data bus (112), and

register means (111) for storing an operation result from said ALU (107), characterized in that said processor comprises
a combinational circuit (108) for performing a logic operation upon reception of a flag (SF) based on an operation result output from said ALU (107) and outputting data dx and dy, an exclusive output port (116) for data dx and dy, and means for outputting the data dx and dy from said exclusive output port (116) is response to a special operation instruction, and for causing the operation result of said ALU (107) to be stored in said register means (111).

8. A processor according to claim 7, characterized in that said processor further comprises a FIFO register (110) arranged between said combinational circuit (108) and said exclusive output port (116) for data dx and dy, the data dx and dy generated upon execution of the special operation instruction being temporarily stored in said FIFO register (110) and then output through said exclusive output port (116).

9. A processor according to claim 4 or 7, characterized in that said processor further comprises a mode setting circuit (109) for controlling said combinational circuit (108), said combinational circuit (108) having a plurality of modes, and a function of said combination circuit (108) being changed by changing a mode bit value.

10. A pattern data generating system for generating a pattern in which painting is performed in accordance with outline data, characterized in that said system comprises
dx,dy generating means (4, 1-1, 1-2, ..., 1-n) for converting outline data into raster data and sequentially generating the raster data as changes dx and dy each taking any one of +1, -1, and 0 at x- and y-coordinates, said dx,dy generating means (4, 1-1, 1-1, ..., 1-n) including a processor (4) having a data bus (112), an exclusive internal dx-dy bus (3) for transferring data dx and dy, an ALU (107) for receiving data from said data bus (112), said ALU (107) outputting a sign flag (SF) representing that an operation result is negative, a combinational circuit (108) for performing a logic operation upon reception of the sign flag (SF) output from said ALU (107) and outputting data dx and dy, register means (111) for storing the operation result from said ALU (107), and means for supplying an output from said combinational circuit (108) to said exclusive internal dx-dy bus (3) in response to a special operation instruction, and for causing the operation result of said ALU (107) to be stored in said register means (111), and
memory means (2), having a function of performing painting in units of scan lines, for storing changes dx and dy generated by said dx,dy generating means (4, 1-1, 1-2, ..., 1-n) and transferred through said exclusive internal dx-dy bus (3).

11. A pattern data generating system for generating a pattern in which painting is performed in accordance with outline data, characterized in that said system comprises
dx,dy generating means (4, 1-1, 1-2, ..., 1-n) for converting outline data into raster data and sequentially generating the raster data as changes dx and dy each taking any one of +1, -1, and 0 at x- and y-coordinates, said dx,dy generating means (4, 1-1, 1-1, ..., 1-n) including a processor (4) having a data bus (112), an exclusive output port (116) for data dx and dy, an ALU (107) for receiving data from said data bus (112), said ALU (107) outputting a sign flag (SF) representing that an operation result is negative, a combinational circuit (108) for performing a logic operation upon reception of the sign flag (SF) output from said ALU (107) and outputting data dx and dy, register means (111) for storing the operation result from said ALU (107), and means for outputting the data dx and dy from said exclusive output port (116) in response to a special operation instruction, and for causing the operation result of said ALU (107) to be stored in said register means (111), and
memory means (2), having a function of performing painting in units of scan lines, for storing changes dx and dy generated by said dx,dy generating means (4, 1-1, 1-2, ..., 1-n).

12. A system according to claim 10 or 11, characterized in that said dx,dy generating means (4, 1-1, 1-2, ..., 1-n) further comprises a Bezier curve generator (11-1) for generating Bezier curve data, and a straight line generator (11-2) for generating straight line data.

13. A system according to claim 10 or 11, characterized in that said memory means (2) comprises first and second memory units (12-1, 12-2), pattern data being generated using said first memory unit (12-1) and the pattern data generated by said first memory unit (12-1) being read out using said second memory unit (12-2).

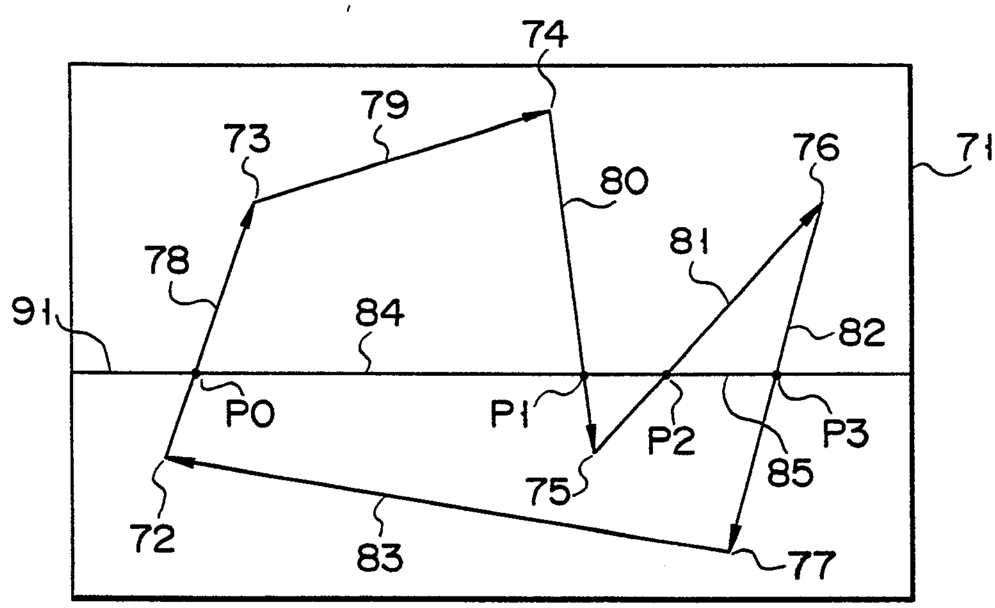


FIG. 1

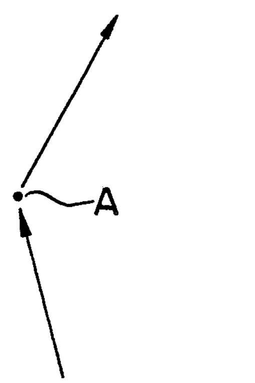


FIG. 2A

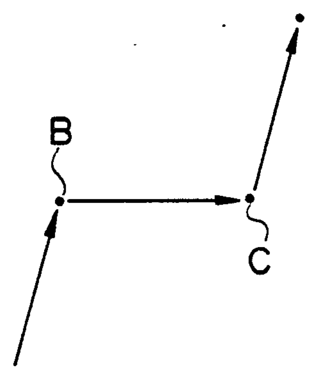


FIG. 2B

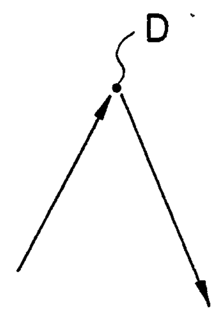


FIG. 2C

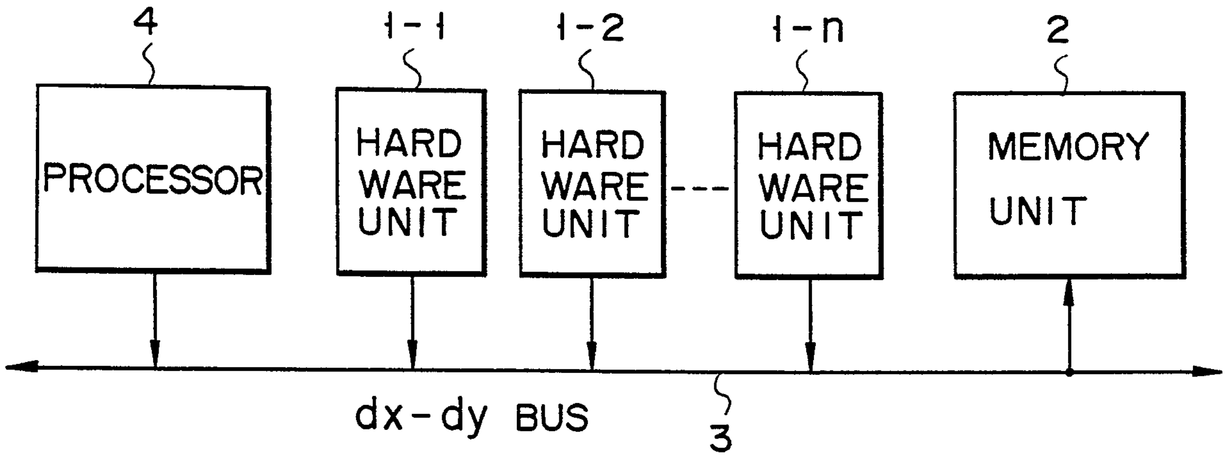
4
1-1
1-2
1-n
2
PROCESSOR
HARD WARE UNIT
HARD WARE UNIT
HARD WARE UNIT
MEMORY UNIT
dx-dy BUS
3

FIG. 3

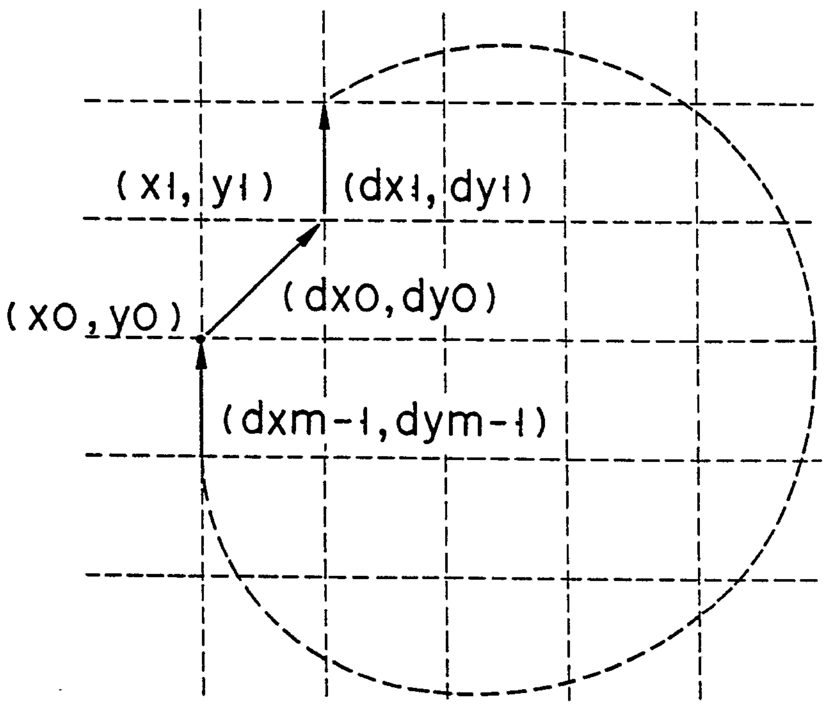
(x1, y1)
(dx1, dy1)
(x0, y0)
(dx0, dy0)
(dxm-1, dym-1)

FIG. 4

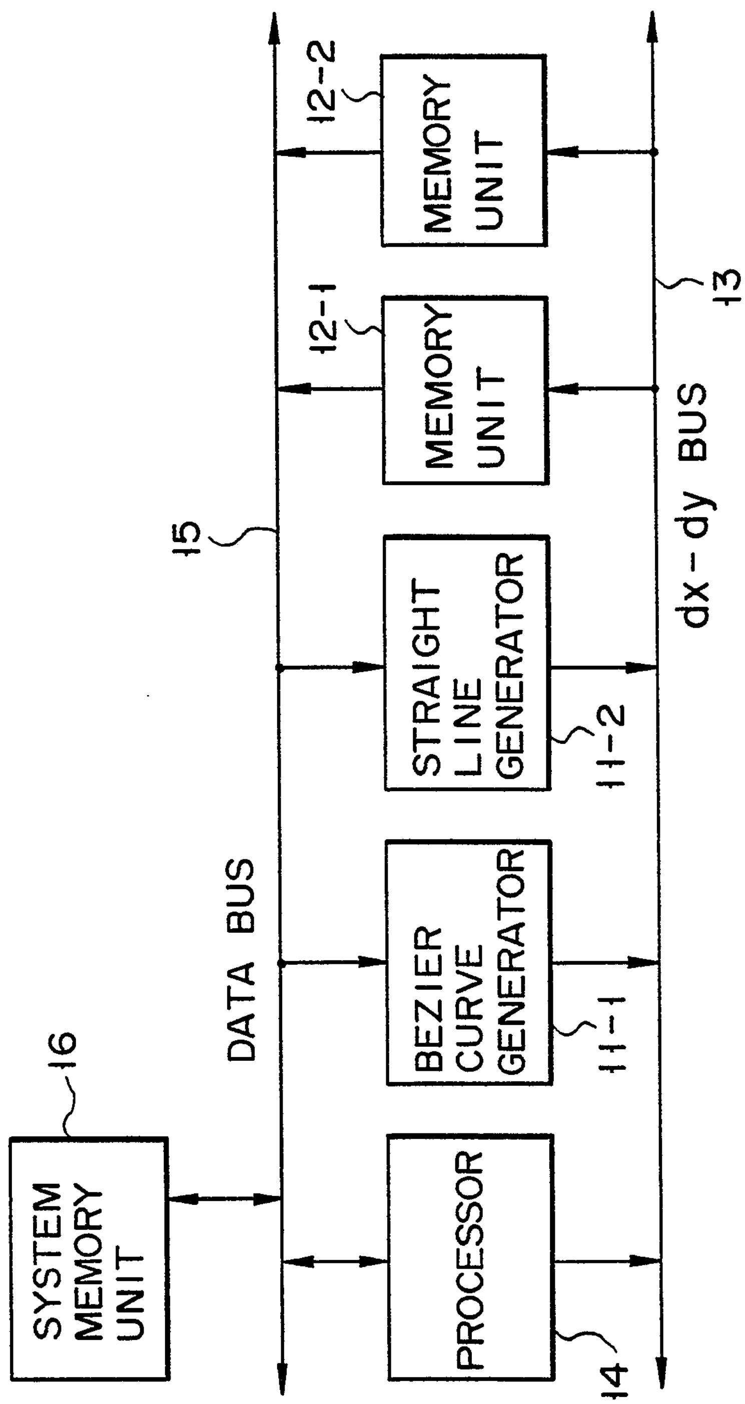
SYSTEM MEMORY UNIT
16
DATA BUS
15
PROCESSOR
14
BEZIER CURVE GENERATOR
11-1
STRAIGHT LINE GENERATOR
11-2
MEMORY UNIT
12-1
MEMORY UNIT
12-2
dx - dy BUS
13

F I G. 5

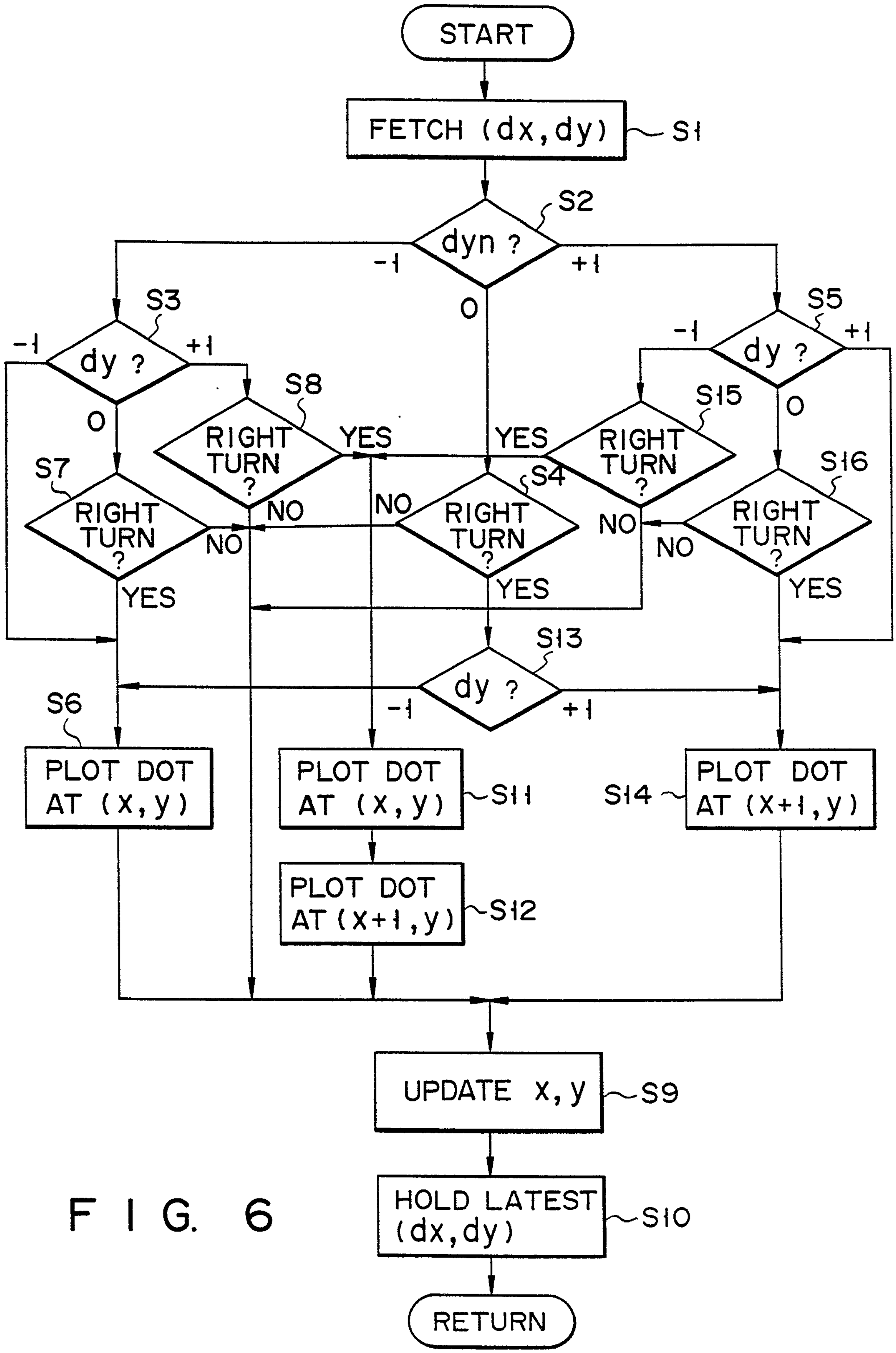
START
FETCH (dx,dy)
S1
S2
dyn ?
-1
+1
0
S3
dy ?
-1
+1
0
S5
dy ?
-1
+1
0
S8
RIGHT TURN ?
YES
NO
S7
RIGHT TURN ?
NO
YES
S4
RIGHT TURN ?
YES
NO
S15
RIGHT TURN ?
YES
NO
S16
RIGHT TURN ?
NO
YES
S13
dy ?
-1
+1
S6
PLOT DOT AT (x,y)
PLOT DOT AT (x,y)
S11
PLOT DOT AT (x+1,y)
S12
S14
PLOT DOT AT (x+1,y)
UPDATE x,y
S9
HOLD LATEST (dx,dy)
S10
RETURN

FIG. 6

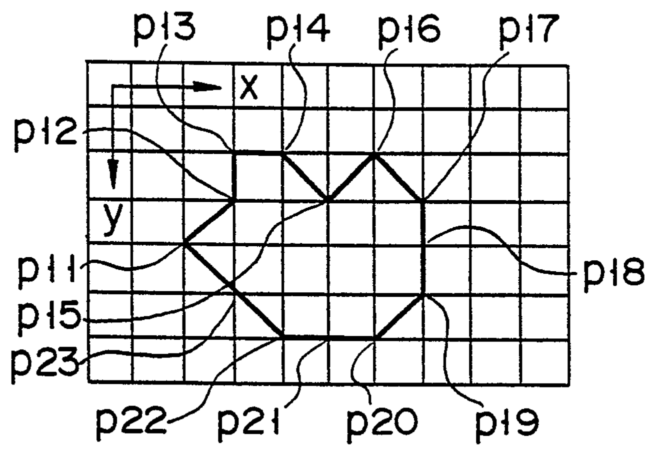


FIG. 7A

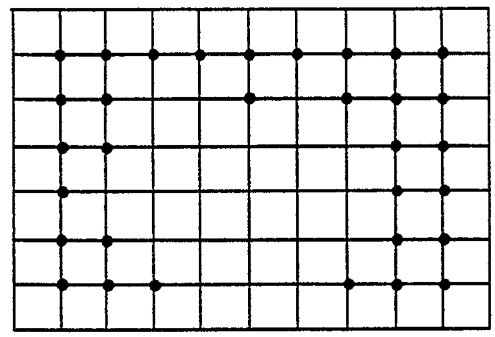

FIG. 7D

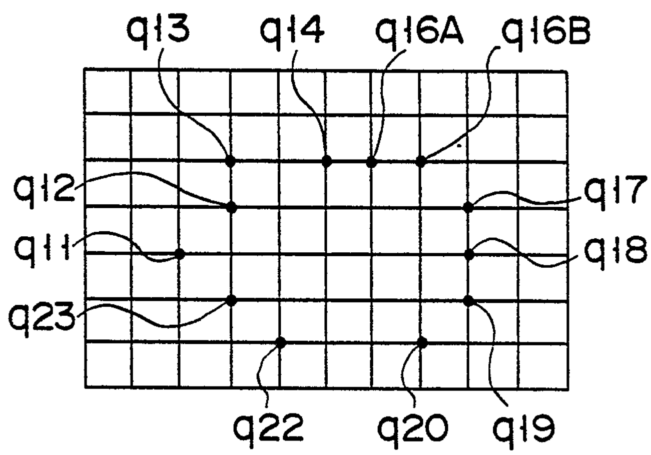


FIG. 7B

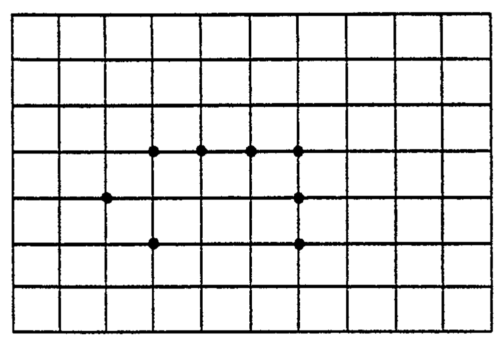

FIG. 7E

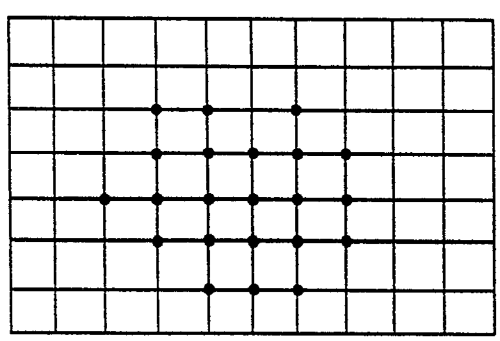

FIG. 7C

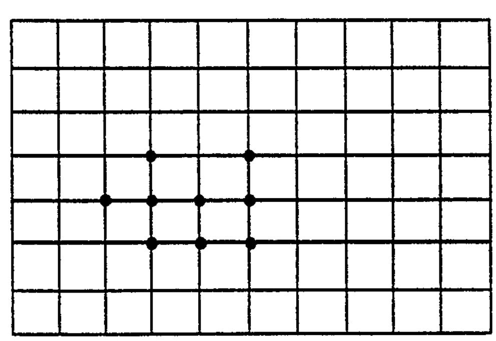

FIG. 7F

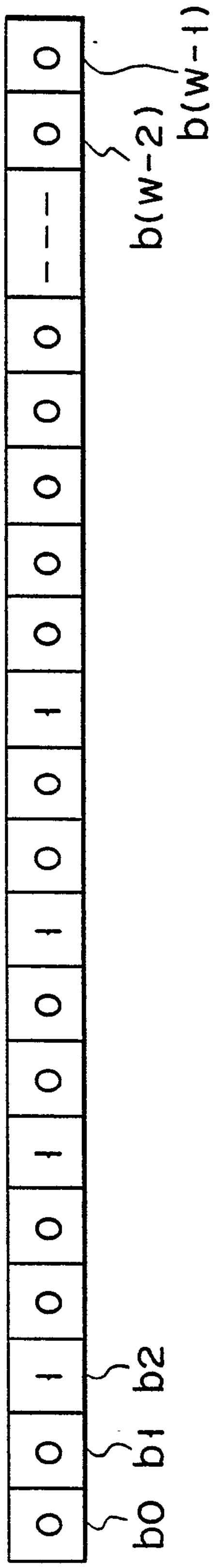


FIG. 8A

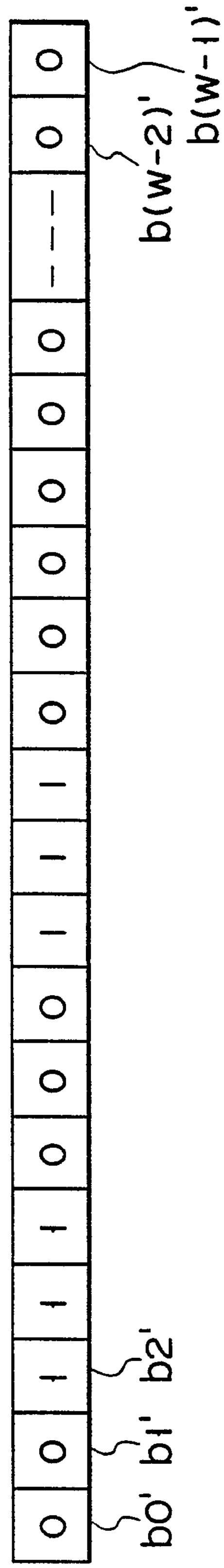


FIG. 8B

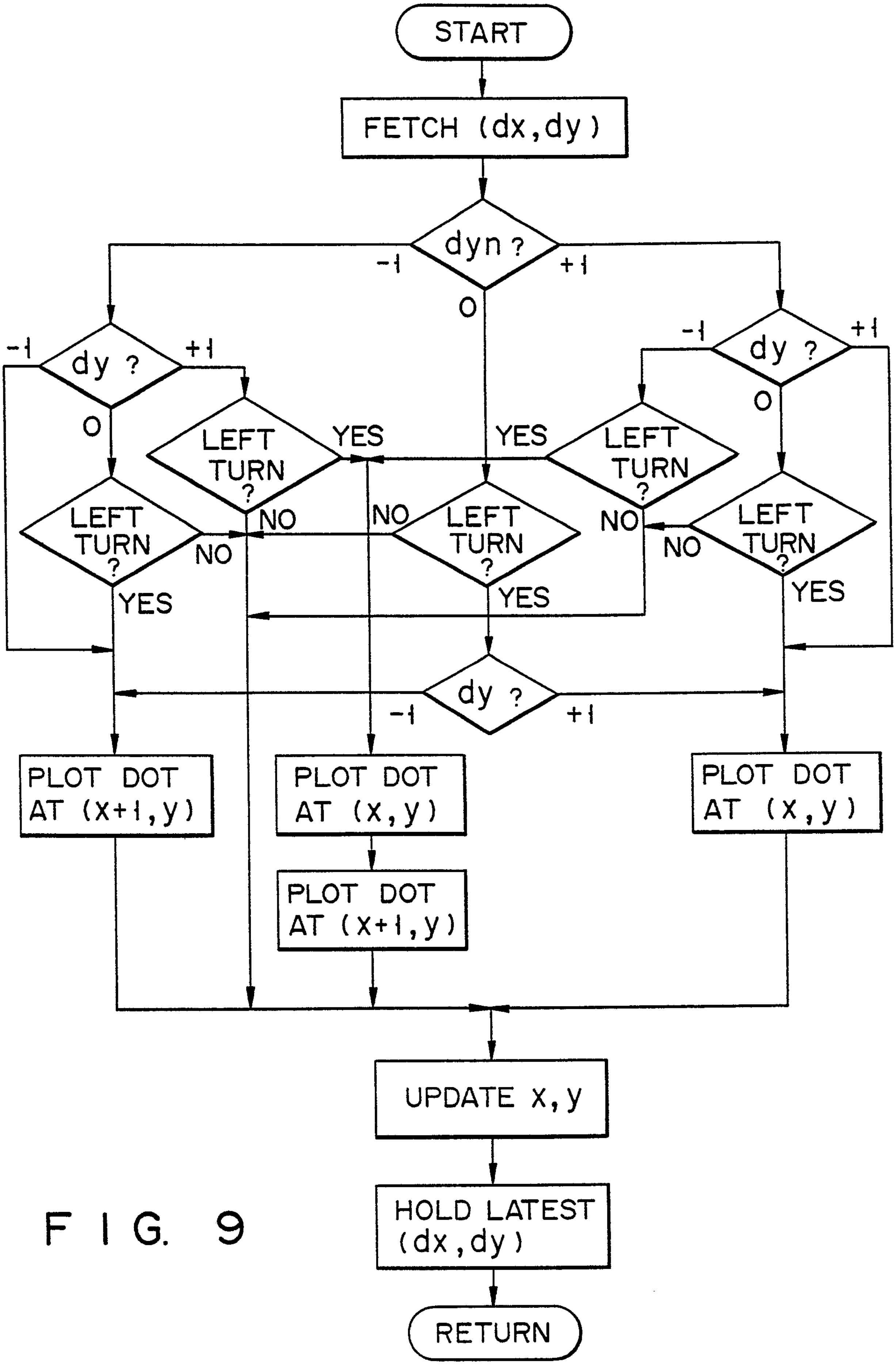
START
FETCH (dx,dy)
dyn ?
-1
+1
0
dy ?
-1
+1
0
LEFT TURN ?
YES
NO
dy ?
-1
+1
PLOT DOT AT (x+1,y)
PLOT DOT AT (x,y)
PLOT DOT AT (x+1,y)
PLOT DOT AT (x,y)
UPDATE x,y
HOLD LATEST (dx,dy)
RETURN

FIG. 9

F I G. 10A

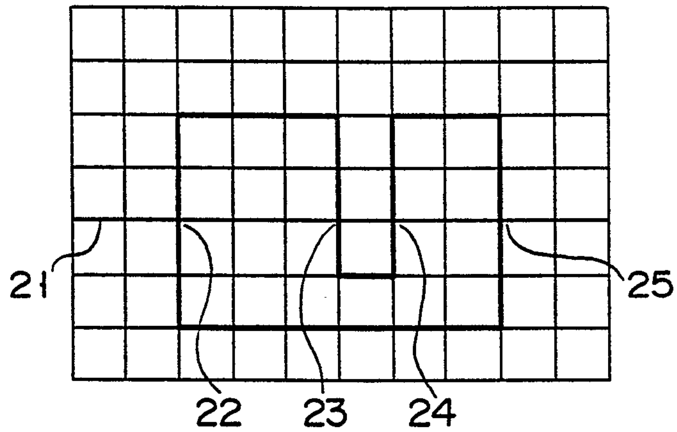


F I G. 10B

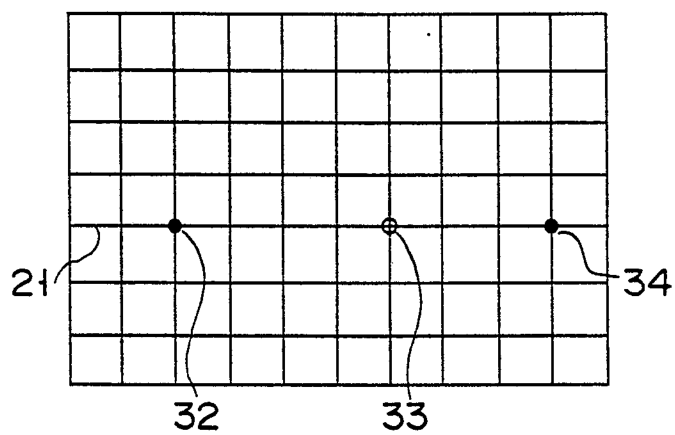


F I G. 10C

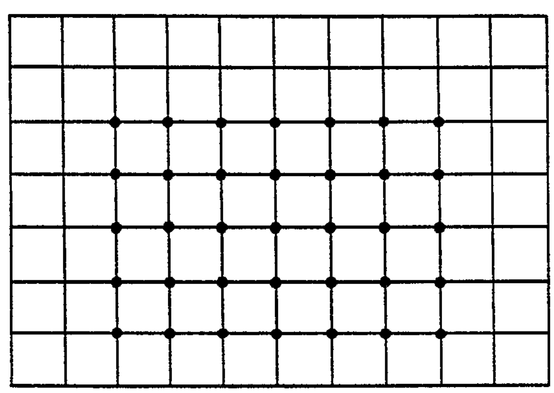

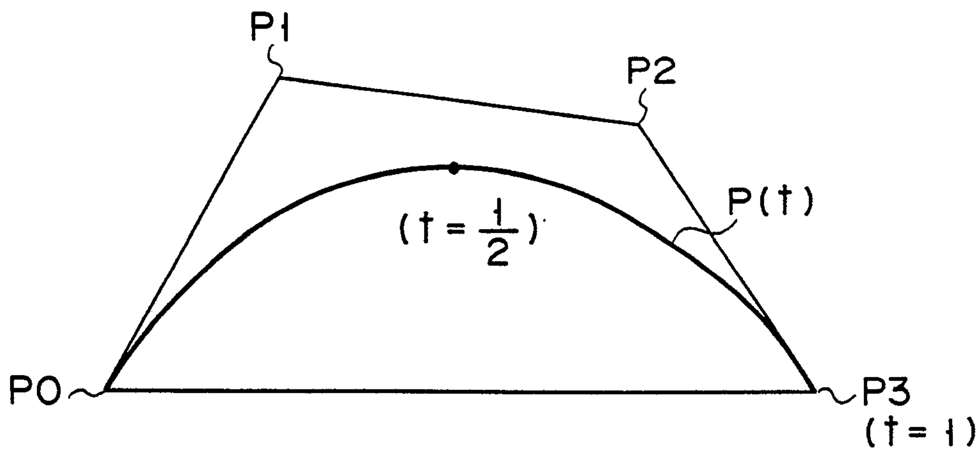


F I G. 11

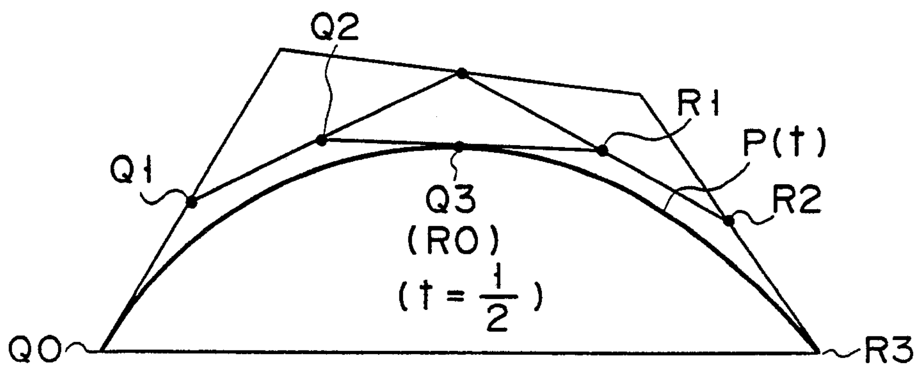


F I G. 12

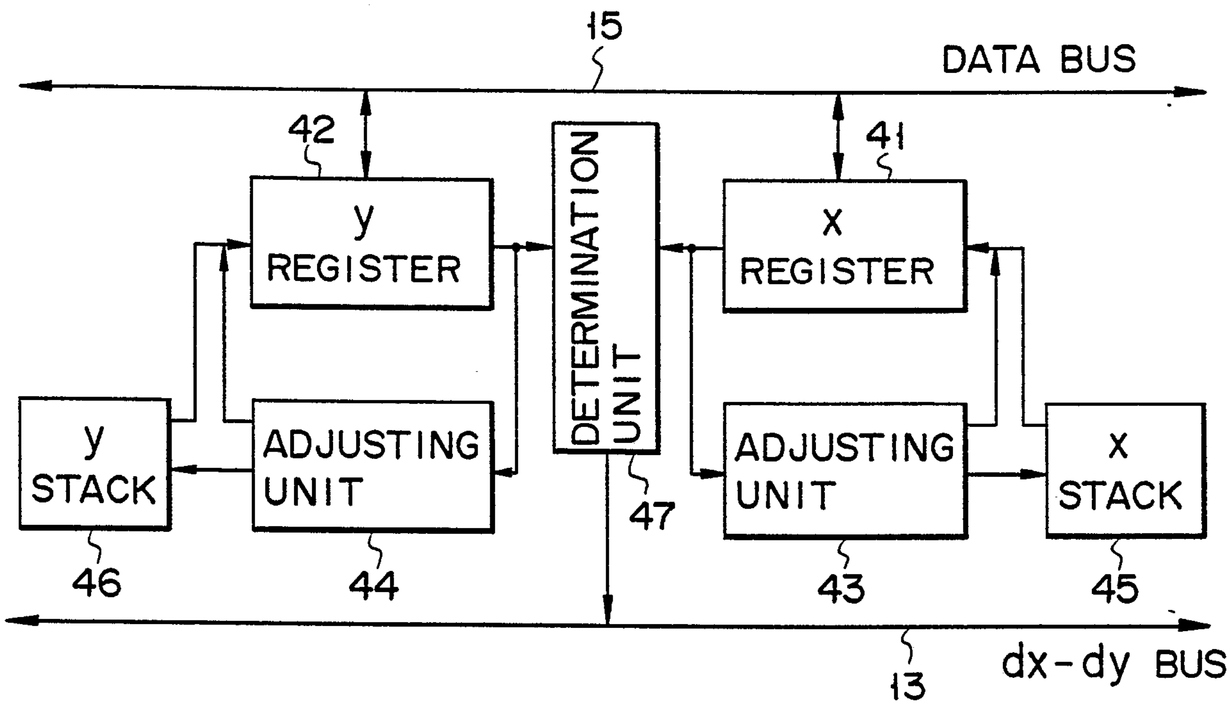
15
DATA BUS
42
41
y
REGISTER
DETERMINATION UNIT
x
REGISTER
y
STACK
ADJUSTING UNIT
ADJUSTING UNIT
x
STACK
47
46
44
43
45
13
dx-dy BUS

FIG. 13

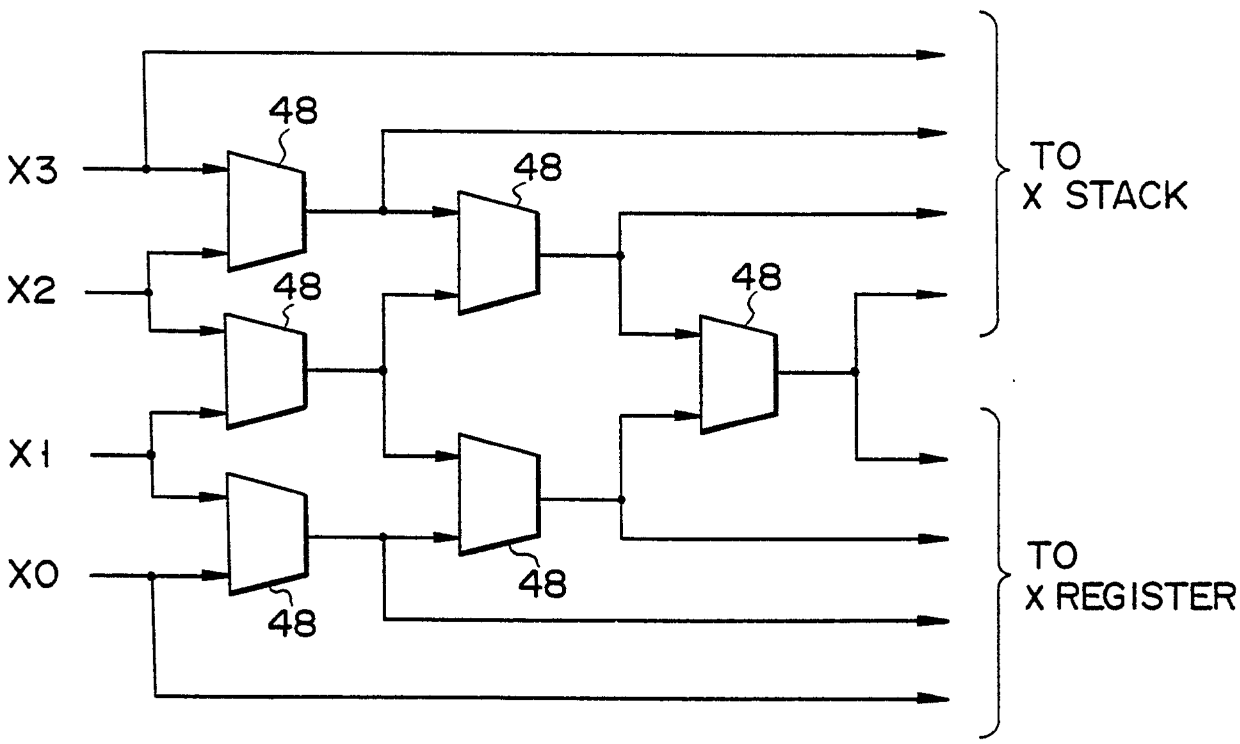
X3
X2
X1
X0
48
TO
X STACK
TO
X REGISTER

FIG. 14

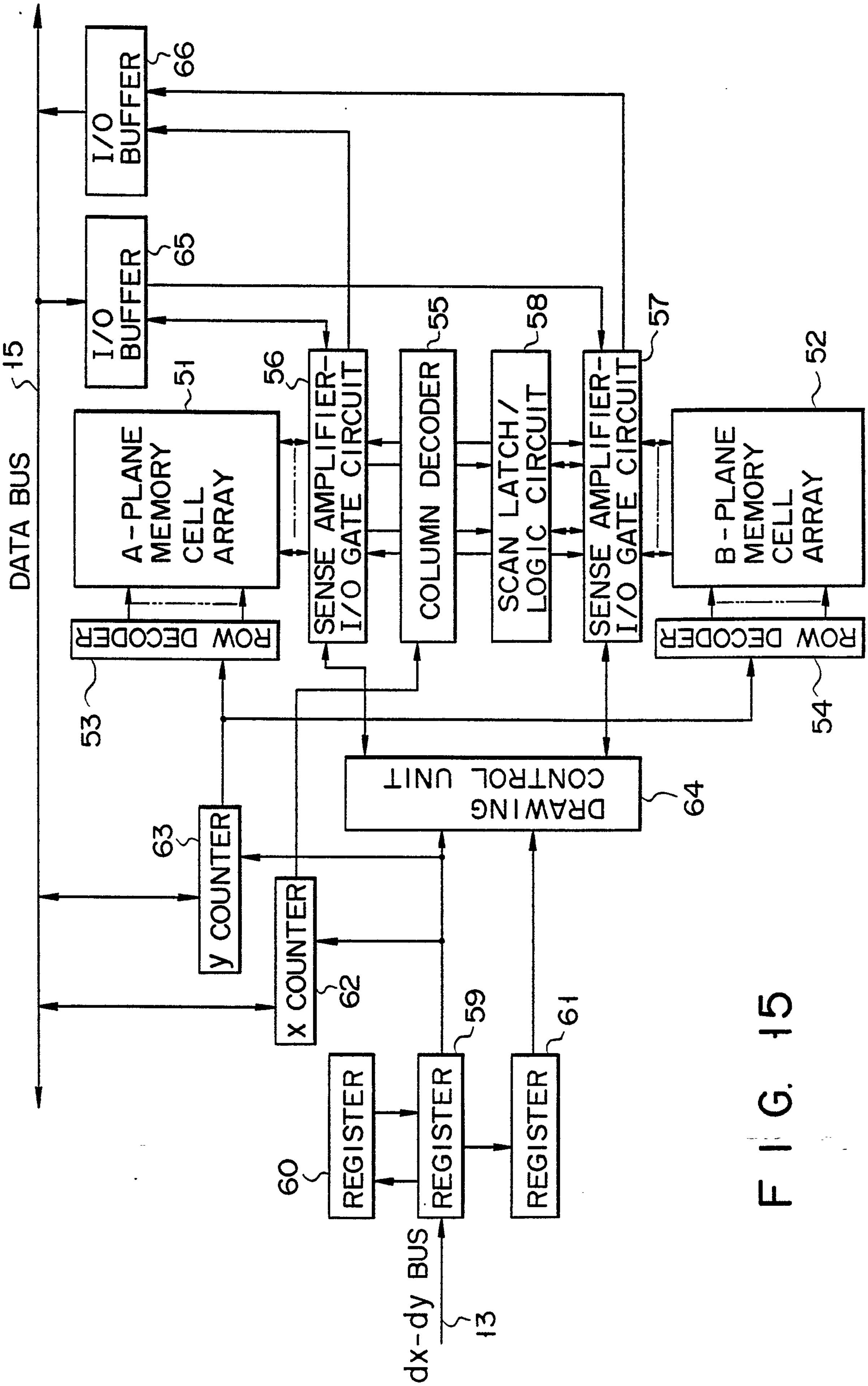
DATA BUS
15
I/O BUFFER
66
I/O BUFFER
65
A-PLANE MEMORY CELL ARRAY
51
56
SENSE AMPLIFIER-I/O GATE CIRCUIT
COLUMN DECODER
55
SCAN LATCH/LOGIC CIRCUIT
58
SENSE AMPLIFIER-I/O GATE CIRCUIT
57
B-PLANE MEMORY CELL ARRAY
52
ROW DECODER
53
ROW DECODER
54
DRAWING CONTROL UNIT
64
y COUNTER
63
x COUNTER
62
REGISTER
60
REGISTER
59
REGISTER
61
dx-dy BUS
13

F I G. 15

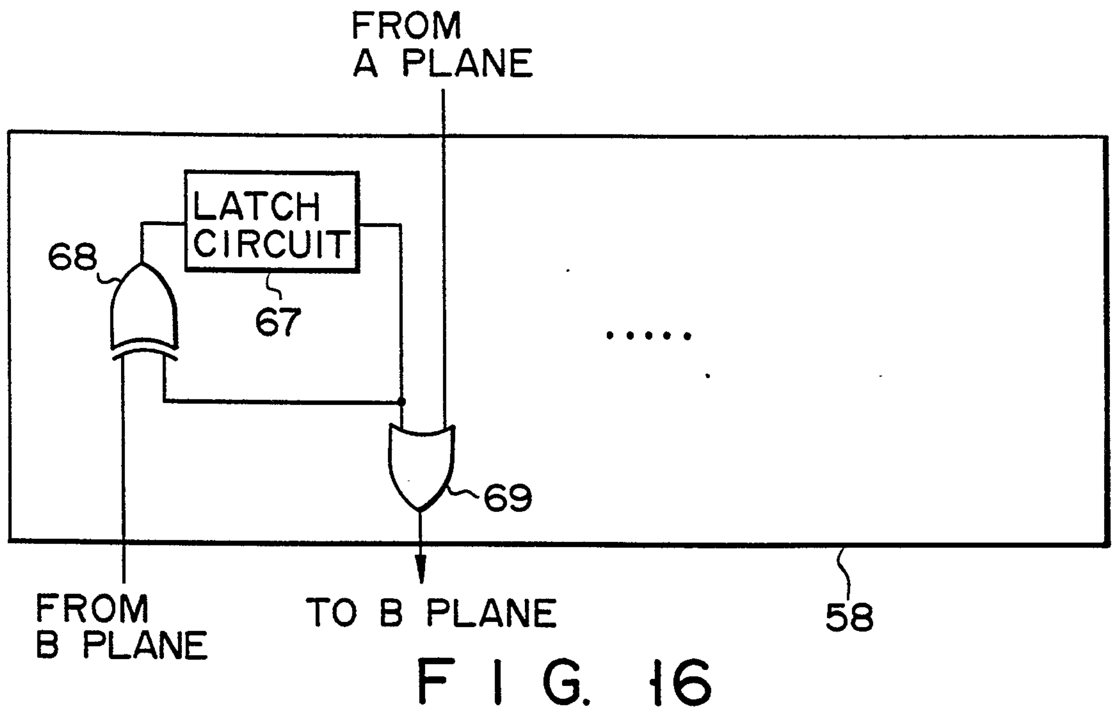


FIG. 16

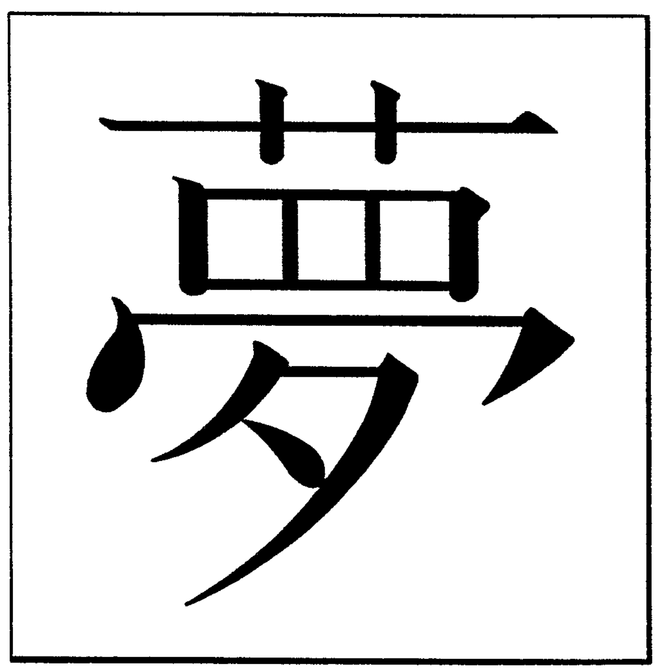

FIG. 17

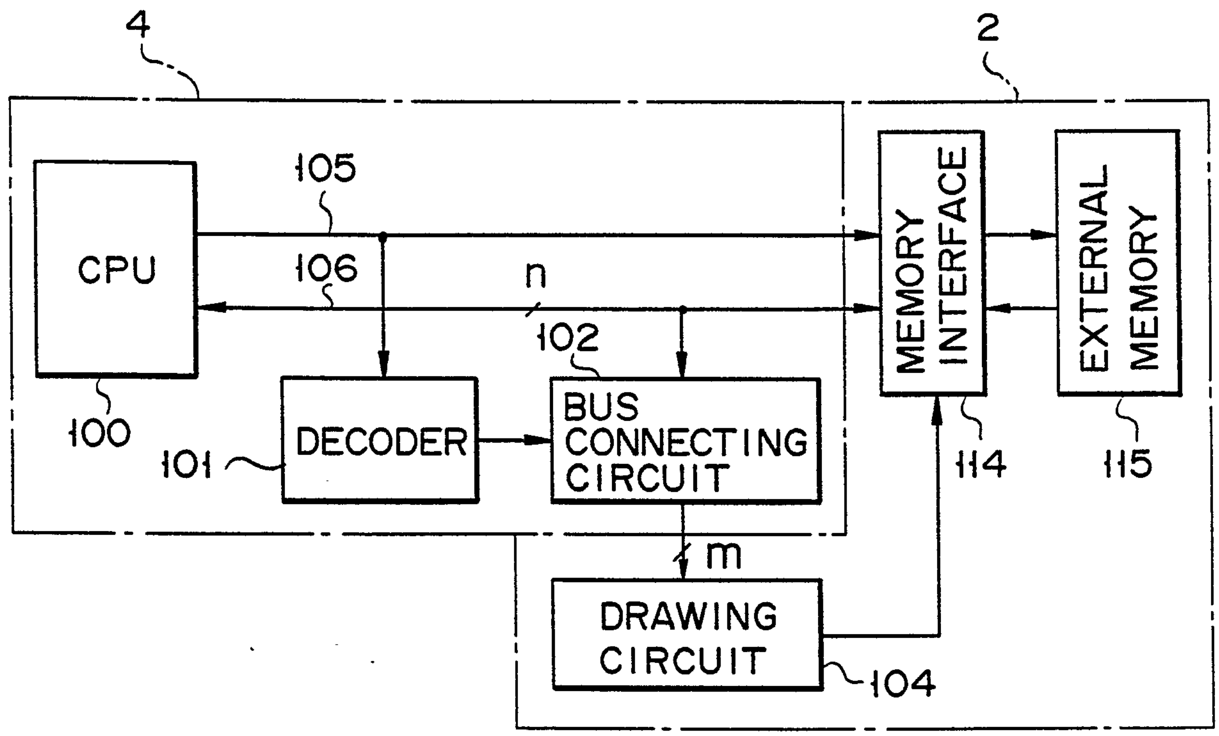
4
2
CPU
105
106
n
102
100
101
DECODER
BUS
CONNECTING
CIRCUIT
MEMORY
INTERFACE
EXTERNAL
MEMORY
114
115
m
DRAWING
CIRCUIT
104

FIG. 18

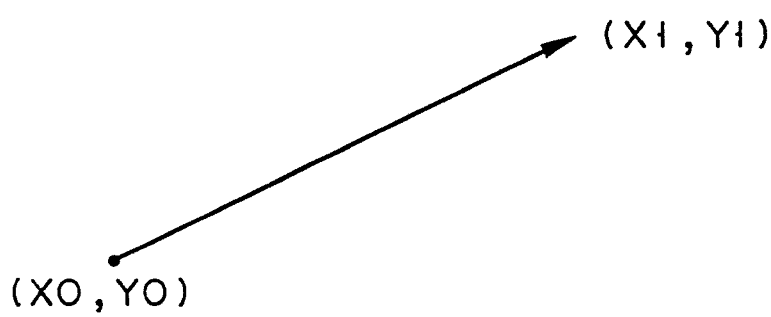
(X1, Y1)
(X0, Y0)

FIG. 21

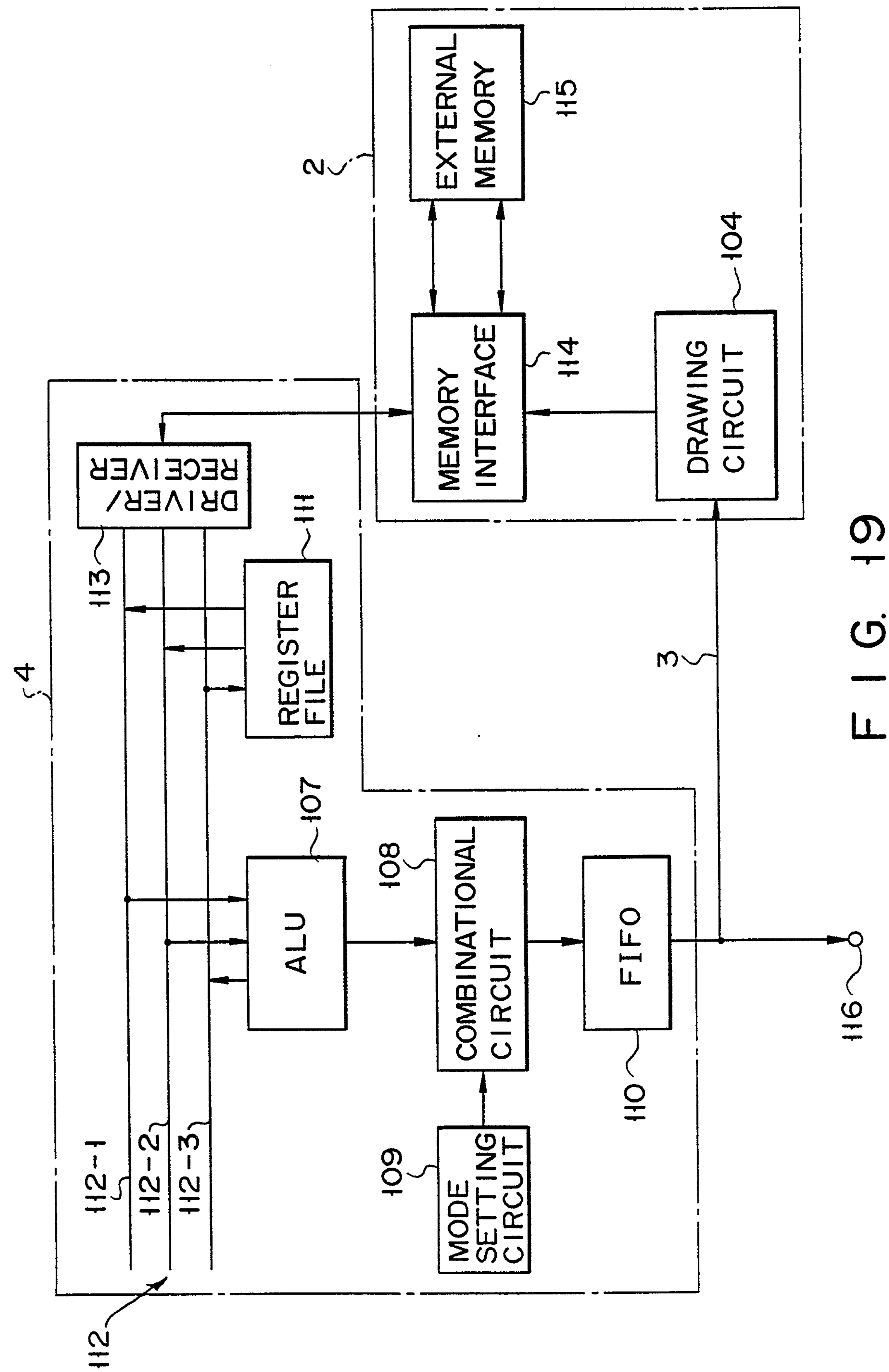
EXTERNAL MEMORY
115
2
104
MEMORY INTERFACE
114
DRAWING CIRCUIT
DRIVER/ RECEIVER
111
113
REGISTER FILE
4
3
107
108
ALU
COMBINATIONAL CIRCUIT
FIFO
116
109
110
MODE SETTING CIRCUIT
112-1
112-2
112-3
112

F I G. 19

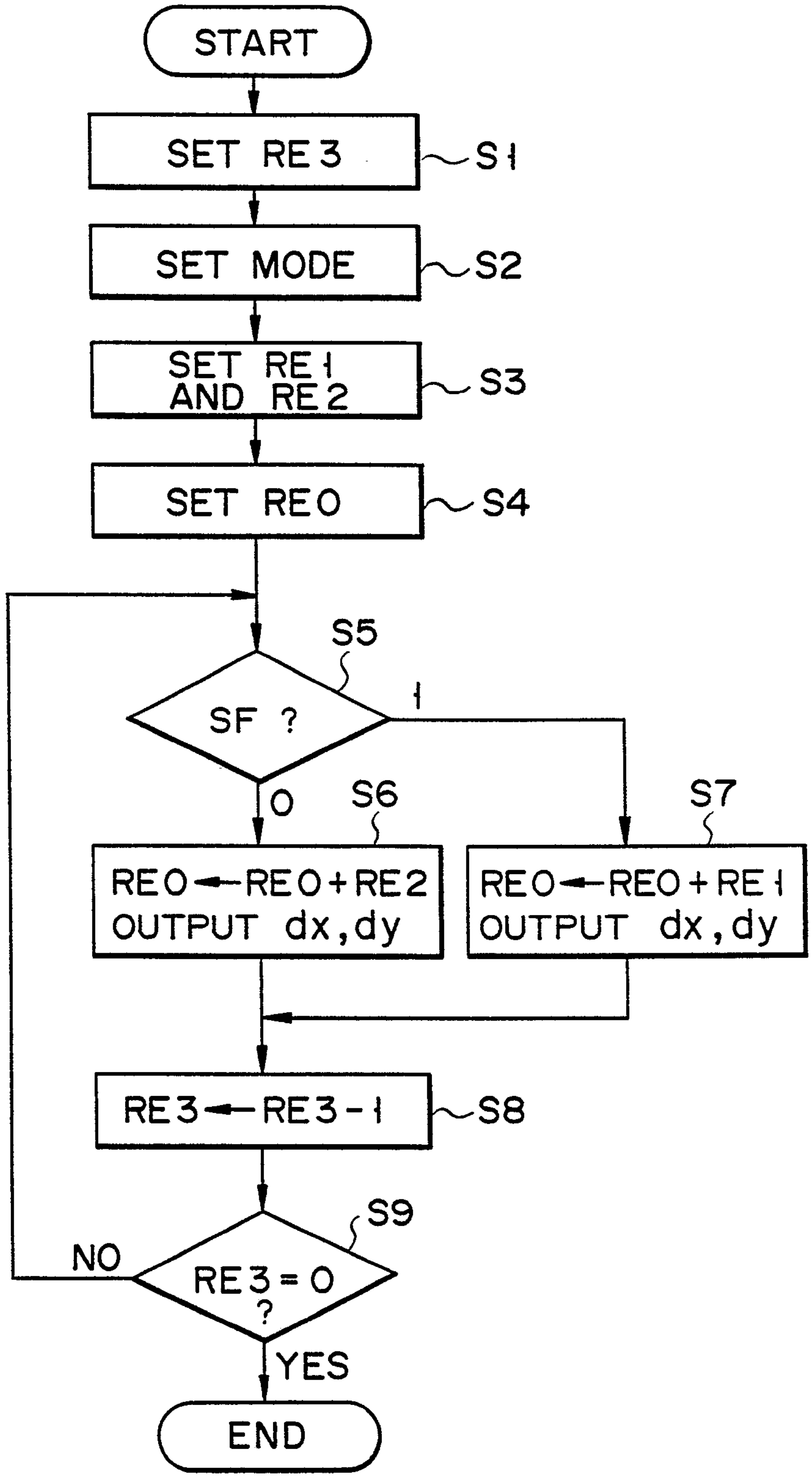
START
SET RE3
S1
SET MODE
S2
SET RE1
AND RE2
S3
SET RE0
S4
S5
SF ?
1
0
S6
S7
RE0←RE0+RE2
OUTPUT dx,dy
RE0←RE0+RE1
OUTPUT dx,dy
RE3←RE3-1
S8
S9
NO
RE3=0
?
YES
END

F I G. 20